# FASCICULE DE BREVET EUROPEEN

(11) **EP 0 892 076 B1**
(45) Date de publication et mention de la délivrance du brevet: **01.03.2006**
(21) Numéro de dépôt: 98401489.4
(22) Date de dépôt: 18.06.1998
(51) Int. Cl.: C22C 19/05, B23K 35/30

(54) **Alliage base nickel et électrode de soudage en alliage base nickel**
Nickelbasislegierung und Schweisselektrode aus einer Nickelbasislegierung
Nickel based alloy and welding electrode made from a nickel based alloy

(30) Priorité: 18.07.1997 FR 9709132
(43) Date de publication de la demande: 20.01.1999
(73) Titulaire: Imphy Alloys, 92800 Puteaux (FR); UGITECH, 73400 Ugine (FR)
(72) Inventeur: Bruyère, Albert, 01000 St. Denis-lesBourgs (FR); Cozar, Ricardo, 58160 La Fermeté (FR); Couffin, Jean-Bernard, 58640 Varennes-Vauzelles (FR); Levigoureux, Jacques, 58160 Sauvigny-les-Bois (FR)
(74) Mandataire: Lagrange, Jacques Etienne M.M.

(56) Documents cités:
- EP-A- 0 693 565
- DE-A- 19 536 978
- US-A- 4 245 698
- US-A- 4 325 994
- PATENT ABSTRACTS OF JAPAN vol. 004, no. 033 (M-003), 21 mars 1980 -& JP 55 008326 A (KOBE STEEL LTD), 21 janvier 1980
- PATENT ABSTRACTS OF JAPAN vol. 016, no. 334 (C-0964), 21 juillet 1992 -& JP 04 099240 A (KUBOTA CORP), 31 mars 1992
- DATABASE WPI Section Ch, Week 7845 Derwent Publications Ltd., London, GB; Class M23, AN 78-81077A XP002059767 -& JP 53 113734 A (NIPPON STEEL CORP) , 4 octobre 1978
- PATENT ABSTRACTS OF JAPAN vol. 016, no. 494 (M-1324), 13 octobre 1992 -& JP 04 182080 A (NKK CORP), 29 juin 1992

## Description

La présente invention concerne un alliage base nickel particulièrement adapté à la fabrication de fils pour le soudage d'aciers inoxydables super duplex ou super austénitiques ayant une très bonne résistance à la corrosion localisée.

Les aciers inoxydables super duplex ou super austénitiques sont des aciers inoxydables contenant, notamment, de 18 % à 30 % de chrome, jusqu'à 7 % de molybdène et jusqu'à 0,5 % d'azote (en % en poids). Ces aciers sont caractérisés par un coefficient PREN = Cr+3,3xMo+16xN supérieur à 35. Ce coefficient est un indicateur de la résistance à la corrosion localisée de ces aciers, résistance à la corrosion localisée d'autant meilleure que le coefficient PREN est élevé.

Ces aciers sont utilisés, notamment, sous forme de tôles assemblées par soudage pour fabriquer des équipements variés exploités dans des milieux fortement corrosifs. Ces équipements sont, par exemple, des équipements de séparation du pétrole et du gaz dans des installations d'extraction de pétrole, des équipements pour la pétrochimie, la chimie ou la dépollution.

Pour que les équipements ainsi fabriqués aient une tenue en service satisfaisante, les soudures doivent avoir une résistance à la corrosion suffisante. On utilise, alors, pour effectuer le soudage, des électrodes en alliage base nickel tels que l'alliage «625» qui contient environ 21 % de chrome et 9 % de molybdène, le reste étant du nickel, des impuretés, et éventuellement, des éléments d'alliage secondaires en faibles quantités. Mais cette technique ne permet pas d'obtenir des soudures ayant une résistance à la corrosion aussi bonne que celle des tôles. De tels alliages sont connus de EP 0 693 565 et US 3 203 792.

Afin d'améliorer la résistance à la corrosion des soudures, on utilise parfois des électrodes de soudage constituées de fils en alliage base nickel contenant principalement de 19 % à 24 % de chrome et de 12 % à 17 % de molybdène, le reste étant du nickel, des éléments d'alliage secondaires en petites quantités et des impuretés résultant de l'élaboration. Mais, cette technique ne permet pas d'augmenter suffisamment la résistance à la corrosion et la ténacité des soudures.

Il est donc souhaitable de pouvoir disposer d'électrodes de soudage en alliage base nickel permettant d'obtenir une résistance à la corrosion et une ténacité dans les soudures encore meilleures. Mais cet alliage doit, de plus, pouvoir être laminé facilement sous forme de fil. Cela suppose, en particulier, qu'il ait une ductilité à chaud suffisante.

Le but de la présente invention est de proposer un tel alliage, utilisable sous forme de fil pour électrode de soudage ou fil de métal d'apport de soudage.

A cet effet, l'invention a pour objet un alliage base nickel dont la composition chimique en % poids est telle que :

24,5 % <Cr ≤ 26,5 %

13,5 % ≤ Mo ≤ 16,5 %

0,05 % ≤ N ≤ 0,2 %

le reste étant du nickel, d'éventuels eiéments d'alliage complémentaires et des impuretés résultant de l'élaboration, les éléments d'alliage complémentaires pouvant être de l'aluminium jusqu'à 0,04 %, du magnésium jusqu'à 0,04 %, comme définit dans la revendication 1.

De préférence, la teneur en chrome est comprise entre 24,8% et 25,2 % et la teneur en Molybdène est comprise entre 14,8 % et 15,2 %.

Les impuretés qui peuvent être, notamment, du fer, du carbone, du silicium, du manganèse, du tungstène, du cuivre, du phosphore et du soufre. La teneur en fer doit, de préférence, rester inférieure à 5 %, et, mieux encore, inférieure à 2 %. De préférence des teneurs maximales des autres impuretés doivent rester inférieures au valeurs suivantes :

C ≤ 0,02 %

Si ≤ 0,1 %

Mn ≤ 0,4 %

W ≤ 0,3 %

P ≤ 0,02 %

S ≤ 0,02 %

Cet alliage peut être utilisé sous forme de tôle, de pièce forgée, de tube, de fil ou de feuillard. En particulier, lorsqu'il est sous forme de fil tréfilé de diamètre en général compris entre 0,6 mm et 5 mm, il peut constituer soit une électrode de soudage MIG, soit un fil de métal d'apport pour soudage TIG, soit encore l'âme métallique d'une électrode enrobée non synthétique. Lorsqu'il est sous forme de feuillard laminé à froid, il peut, également, être utilisé comme métal d'apport pour effectuer des revêtements par soudage.

L'invention concerne, également, un procédé de soudage TIG ou MIG de produits en acier inoxydable super austénitique ou super duplex.

L'invention va maintenant être décrite plus en détail mais de façon non limitative et illustrée par des exemples.

L'alliage selon l'invention, contient, outre le nickel qui est la base :
- plus de 24,5 %, et de préférence plus de 24,8 %, mais moins de 26,5 %, et de préférence moins de 25,2 %, de chrome;
- de 13,5 % à 16,5 %, et de préférence, de 14,8 % à 15,2 % de molybdène.

Les teneurs en ces deux éléments sont choisies pour permettre d'obtenir un PREN supérieur à 69, et d'énviron. 75 pour l'analyse préférentielle, tout en évitant la formation trop importante, au cours de la solidification, de phases intermétalliques telles que la phase σ.

Le PREN suffisamment élevé permet d'obtenir une bonne résistance à la corrosion.

La formation limitée de phases intermétalliques permet d'effectuer un laminage à chaud dans de bonnes conditions et de bonnes propriétés de ductilité de la soudure. En particulier les phases intermétalliques peuvent être mises en solution par chauffage au dessus de 1200°C pendant quelques heures, ce qui est indispensable pour pouvoir fabriquer le fil machine dans de bonnes conditions, ou, plus généralement, pour réaliser une mise en forme par déformation plastique à chaud, par exemple, par laminage ou par forgeage.

L'alliage peut contenir, en outre :
- de 0 % à 0,2 % d'azote pour limiter la formation de phases intermétalliques dans les cordons de soudure et, ainsi, assurer une bonne résistance à la corrosion et une bonne ténacité de ces soudures ; à noter que, en l'absence de traitement particulier au cours de l'élaboration, l'alliage contient toujours entre environ 0,01 % et 0,05 % d'azote, mais pour certaines applications il est souhaitable de fixer avec une meilleur précision la teneur en azote, et, en particulier d'en ajouter pour que la teneur soit supérieure à 0,05 %;
- de 0 % 0,04 % d'aluminium pour assurer une bonne compacité des cordons de soudure ;
- de 0 % à 0,04 % de magnésium pour améliorer l'aptitude au laminage à chaud et également la compacité des cordons de soudure. le reste est constitué d'impuretés résultant de l'élaboration. Ces impuretés doivent avoir des teneurs limitées, et en particulier :
   - la teneur en fer doit, de préférence, rester inférieure à 5 %, et mieux encore, inférieure à 2 %, c'est, en particulier, le cas lorsque l'alliage est destiné à réaliser un revêtement par soudage sur une pièce en acier faiblement allié, afin de limiter la dilution par le fer dans la couche de revêtement en contact avec le milieu corrosif;
   - la teneur en carbone doit, de préférence, rester inférieure à 0,02 % pour éviter les risques de corrosion intergranulaire dans les cordons de soudure réaffectés thermiquement, en particulier dans le cas du soudage multipasses ;
   - les teneurs en silicium et manganèse doivent, de préférence, rester respectivement inférieures à 0,1 % et 0,4 % pour réduire la tendance à former la phase σ ;
   - la teneur en tungstène doit, de préférence rester inférieure à 0,3 % pour limiter la formation de phases intermétalliques ;
   - la teneur en cuivre doit, de préférence rester inférieure à 2 % pour assurer une bonne aptitude à la déformation plastique à chaud lors de la fabrication du fil machine ;
   - la teneur en phosphore doit, de préférence, rester inférieure à 0,02 % pour assurer une bonne résistance à la fissuration à chaud des soudures ;
   - la teneur en soufre doit, de préférence, rester inférieure à 0,02 % pour assurer une bonne résistance à la fissuration à chaud et une bonne tenue à la corrosion des soudures.

L'alliage ayant cette composition est coulé, par exemple, sous forme de billette, puis après réchauffage au dessus de 1200°C pendant plus de 4 heures, est laminé à chaud sur un train à fil pour obtenir un fil machine de diamètre compris entre 5,5 mm et 10 mm. Ce fil machine est alors tréfilé jusqu'à un diamètre compris entre 0,6 mm et 5 mm.

Le fil tréfilé ainsi obtenu peut être utilisé directement pour le soudage TIG ou MIG de pièces, et par exemple de tôles, en acier inoxydable super duplex ou super austénitique. Il peut également être utilisé pour le soudage de pièces en alliage base nickel tels que, par exemple, l'alliage du type « 625 ».

A titre d'exemple et de comparaison, on a fabriqué un alliage A selon l'invention et les alliages B et C conformes à l'art antérieur, dont les compositions chimiques étaient (en % en poids) :

| | Cr | Mo | N | Al | Mg | Fe | C | Si | Mn | W | Cu | P | S | PREN |
|---|---|---|---|---|---|---|---|---|---|---|---|---|---|---|
| A | 24,8 | 15,0 | 0,12 | 0,12 | 0,012 | 1,8 | 0,01 | 0,06 | 0,06 | 0,05 | 0,01 | 0,004 | 0,001 | 76,2 |
| B | 22,5 | 15,9 | 0,02 | 0,25 | 0.003 | 0.23 | 0,01 | 0,02 | 0,15 | 0,03 | 0.01 | 0,002 | 0,002 | 75,3 |
| C | 21,4 | 12,8 | 0,02 | 0,10 | 0.008 | 3,2 | 0,01 | 0,05 | 0,22 | 2,9 | 0,04 | 0,008 | 0,001 | 64,0 |

Avec ces alliages on a fabriqué, par laminage à chaud après réchauffage à 1200°C pendant 8 heures, du fil machine de 5,5 mm de diamètre qui a été tréfilé pour obtenir du fil tréfilé de 1,2 mm de diamètre.

Avec ces trois fils on a effectué un soudage MIG de tôles en acier inoxydable super duplex de 8 mm d'épaisseur et de composition :

| Cr | Ni | Mo | N | C | Si | Mn | S | P | PREN |
|---|---|---|---|---|---|---|---|---|---|
| 25,0 | 6,3 | 3,7 | 0,25 | 0,015 | 0,34 | 1,0 | 0,001 | 0.012 | 41,2 |

On a réalisé des joints en V (angle = 70°), le gaz de protection était de l'argon avec 20 % d'hélium et l'énergie de soudage était de 0,7 kJ/mm. Toutes les soudures présentaient un aspect satisfaisant et leurs propriétés étaient :

| Fil | Compacité (ASME IX) | Ferrite max en ZAT (%) | PREN moyen zone fondue | Tc piqûres °C ASTM G 48 A | KCV - 50 °C (J/cm²) | Rm (MPa) |
|---|---|---|---|---|---|---|
| A | conforme | 60 | 69,3 | 55 | 184 | 864 |
| B | conforme | 66 | 68,4 | 50 | 126 | 848 |
| C | 1 manque de fusion | 72 | 59,2 | 47,5 | 98 | 812 |

Ces résultats montrent que le fil A selon l'invention donne une meilleur résistance à la corrosion et surtout une meilleure résilience à basse température que les fils B et C conformes à l'art antérieur. Ces performances meilleures sont particulièrement intéressantes lorsque les soudures sont effectuées sur des équipements destinés à l'extraction du pétrole en offshore.

Avec les fils A et C on a également soudé des tôles en acier super austénitique de 15 mm d'épaisseur et de composition :

| Cr | Ni | Mo | W | Mn | N | Cu | C | Si | S | P | PREN |
|---|---|---|---|---|---|---|---|---|---|---|---|
| 23,7 | 21,6 | 5,7 | 2,0 | 3,0 | 0,48 | 1,6 | 0,02 | 0,10 | 0,0005 | 0,016 | 50,2 |

Des joints en V (angle 60°) avec talon ont été réalisés en soudage MIG avec un gaz Ar + 10 % He + 0,25 % CO₂, et avec une énergie de soudage de 1 kJ/mm. Toutes les soudures ont un aspect satisfaisant et les caractéristiques des soudures étaient :

| Fil | Compacité (ASME IX) | PREN moyen zone fondue | Tc piqûres °C ASTM G 48 A | KCV -196 °C (J/cm²) | Rm (MPa) |
|---|---|---|---|---|---|
| A | conforme | 71,5 | 90 | 176 | 787 |
| C | conforme | 61,5 | 75 | 152 | 736 |

Le fil A conforme à l'invention conduit à une soudure ayant une meilleure résistance à la corrosion, une meilleure résilience' à basse température et une résistance mécanique plus élevée que le fil C selon l'art antérieur.

## Revendications

1. - Alliage base nickel **caractérisé en ce que** sa composition chimique comprend, en poids :
24,5 < Cr ≤ 26,5 %
13,5 ≤ Mo ≤ 16,5 %
0,05 % ≤ N ≤ 0,2 %
les éléments complémentaires suivants:
0 % ≤ Al ≤ 0,04 %
0 % ≤ Mg ≤ 0,04 %
et les impurities suivantes résultant de l'élaboration:
Si ≤ 0,1 %
Fe ≤ 5 %
Mn ≤ 0,4 %
W ≤ 0,3 %
le reste étant du nickel
et des autres impuretés résultant de l'élaboration.

2. - Alliage base nickel selon la revendication 1 **caractérisé en ce que** :
24,8 ≤ Cr ≤ 25,2 %
14,8 % ≤ Mo ≤ 15,2 %

3. - Alliage base nickel selon l'une quelconque des revendications 1 à 2 **caractérisé en ce que** :
Fe ≤ 2 %

4. - Alliage base nickel selon l'une quelconque des revendications 1 à 3 **caractérisé en ce que** les impuretés comprennent:
C ≤ 0,02 %
P ≤ 0,02 %
S ≤ 0,02 %

5. Fil tréfilé ou feuillard laminé à froid **caractérisé en ce qu'**il est constitué d'un alliage base nickel selon l'une quelconque des revendications 1 à 4.

6. Electrode de soudage **caractérisée en ce qu'**elle comporte au moins un fil selon la revendication 5.

7. Procédé de soudage d'un acier inoxydable super duplex ou super austénitique ou d'un alliage base nickel **caractérisé en ce que** le métal d'apport est fourni par un fil tréfilé ou un feuillard à froid selon la revendication 5.

## Patentansprüche

1. Nickelbasislegierung, **dadurch gekennzeichnet, dass** ihre chemische Zusammensetzung in Gewichtsprozenten:
24,5 % < Cr ≤ 26,5 %
13,5 ≤ Mo ≤ 16,5 %
0,05 % ≤ N ≤ 0,2 %
die folgenden Zusatzelemente:
0 % ≤ Al ≤ 0,04 %
0 % ≤ Mg ≤ 0,04 %
sowie die folgenden, aus der Verarbeitung stammenden Verunreinigungen umfasst:
Si ≤ 0,1 %
Fe ≤ 5 %
Mn ≤ 0,4 %
W ≤ 0,3 %
wobei der Rest aus Nickel und anderen, aus der Verarbeitung stammenden Verunreinigungen besteht.

2. Nickelbasislegierung nach Anspruch 1, **dadurch gekennzeichnet, dass**:
24,8 ≤ Cr ≤ 25,2 %
14,8 % ≤ Mo ≤ 15,2 %

3. Nickelbasislegierung nach einem der Ansprüche 1 bis 2, **dadurch gekennzeichnet, dass**:
Fe ≤ 2 %

4. Nickelbasislegierung nach einem der Ansprüche 1 bis 3, **dadurch gekennzeichnet, dass** die Verunreinigungen umfassen:
C ≤ 0,02 %
P ≤ 0,02 %
S ≤ 0,02 %

5. Gezogener Draht oder kaltgewalztes Band, **dadurch gekennzeichnet, dass** er/es aus einer Nickelbasislegierung nach einem der Ansprüche 1 bis 4 gebildet ist.

6. Schweißelektrode, **dadurch gekennzeichnet, dass** sie wenigstens einen Draht nach Anspruch 5 enthält.

7. Verfahren zum Schweißen eines nichtrostenden Superduplex- oder superaustenitischen Stahls oder einer Nickelbasislegierung, **dadurch gekennzeichnet, dass** das Aufschweißmetall durch einen gezogenen Draht oder ein Kaltband nach Anspruch 5 geliefert wird.

## Claims

1. nickel-based alloy **characterised in that** the chemical composition thereof comprises, by weight:
24,5 % < Cr ≤ 26,5 %
13,5 ≤ Mo ≤ 16,5 %
0,05 % ≤ N ≤ 0,2 %
the following supplementary elements:
0 % ≤ Al ≤ 0,04 %
0 % ≤ Mg ≤ 0,04 %
and the following impurities arising from processing:
Si ≤ 0,1 %
Fe ≤ 5 %
Mn ≤ 0,4 %
W ≤ 0,3 %
the remainder being nickel
and other impurities arising from processing.

2. A nickel-based alloy according to claim 1,
**characterised in that**
24,8 ≤ Cr ≤ 25,2 %
14,8 % ≤ Mo ≤ 15,2 %

3. A nickel-based alloy according to either one of claims 1 to 2, **characterised in that**
Fe ≤ 2 %

4. A nickel-based alloy according to any one of claims 1 to 3, **characterised in that** the impurities comprise:
C ≤ 0,02 %
P ≤ 0,02 %
S ≤ 0,02 %

5. A drawn wire or cold-rolled strip, **characterised in that** it is made from a nickel-based alloy according to any one of claims 1 to 4.

6. A welding electrode, **characterised in that** it comprises at least one wire according to claim 5.

7. A process for welding a super duplex or super austenitic stainless steel or a nickel-based alloy, **characterised in that** the filler metal is supplied by a drawn wire or a cold-rolled strip according to claim 5.
